Europäisches Patentamt

(19) European Patent Office

Office européen des brevets

(11) Publication number: **0 232 278**
**B1**

(12) EUROPEAN PATENT SPECIFICATION

(45) Date of publication of patent specification: **19.07.89**

(51) Int. Cl.⁴: **F 24 D 19/10,** G 05 D 23/19

(21) Application number: **85905826.5**

(22) Date of filing: **15.11.85**

(86) International application number:
**PCT/FI85/00092**

(87) International publication number:
**WO 86/02988 22.05.86 Gazette 86/11**

(54) REAL TIME TESTING OF WEATHER-RELATED BEHAVIOUR OF BUILDINGS.

(30) Priority: **16.11.84 FI 844493**

(43) Date of publication of application:
**19.08.87 Bulletin 87/34**

(45) Publication of the grant of the patent:
**19.07.89 Bulletin 89/29**

(84) Designated Contracting States:
**AT BE CH DE FR GB IT LI LU NL SE**

(56) References cited:
**EP-A-0 074 868**
**US-A-4 362 270**

**Proceedings of the 5th IFAC/IFIP International Conference, 14-17 June 1977, The Hague, (NL), Digital Computer Applications to Process Control, Amsterdam (NL), A. Udink et al.: "Digital adaptive control of a glasshouse heating system", pp. 505-511**

**N.T.I.S., Techn. Notes, April 1984, Springfield Virginia (US), "Instrumentation for an Energy-Conserving House", NTN84-0233**

(73) Proprietor: **EKONO OY**
**Revontulentie 6**
**SF-02100 Espoo (FI)**

(72) Inventor: **HEINOLA, Reino**
**Lentäjäntie 5 B 4**
**SF-03100 Nummela (FI)**
Inventor: **PUKKILA, Ilkka**
**Leilankuja 2 C 47**
**SF-02230 Espoo (FI)**
Inventor: **RANTAMA, Markku**
**Lystinmäenkuja 5**
**SF-02210 Espoo (FI)**
Inventor: **ERKIÖ, Eero**
**Maistraatinkatu 2 A 1**
**SF-00240 Helsinki (FI)**

(74) Representative: **Reinhard, Skuhra, Weise**
**Leopoldstrasse 51**
**D-8000 München 40 (DE)**

Courier Press, Leamington Spa, England.

## Description

The invention refers to a method of testing the weather-related behaviour including energy consumption of buildings according to the head portion of claim 1, and a method for supervision of comfort and energy consumption of buildings according to the head portion of claim 2.

It is a common object to make buildings comfortable and economical in terms of indoor climate and energy. The basis for planning and further development of alternatives is close control of indoor climate and energy flows. Energy flows for a year typical of a district should be calculated within the range of a few percent. If a decision is made to employ e.g. masses or a solar collector on the basis of cost/utility aspects for the conservation of heat, it is necessary to have accurate information about their effects on energy flows and indoor climate.

Energy flows and indoor climate are mostly affected by weather conditions outside the house. The most important factors of weather are temperature, wind and solar radiation. The interaction between weather conditions and indoor climate as well as energy flows of a building is called weather-related behaviour of a building. Thus, the process in question is affected by outside weather, indoor conditions of a building, lining of a building, masses of a building, technical systems of a building and habits of the users of a building.

The comparable degree of control over the weather-related behaviour of buildings is necessary e.g. for designers, researchers, developers, housing authorities and quality controllers, in close operation control for setting off alarm about deviations, in anticipatory control for calculating proper provisions according to delays, etc.

Approximately one percent accuracy has been reached experimentally in controlling the energy flows.

At present, it has been quite often found that the real consumption has only been half of what was calculated. It has also become a common practice to justify calculations by claiming that the differences are only a result of different life styles. However, the reason lies in incorrect modes of calculation and in errors or defects in available basic information.

A control system for the energy consumption is disclosed in proceedings of the 5th IFAC/IFEP International Conference, 14—17 June 1977. The Hague (NL), Digital Computer Applications to Process Control, Amsterdam, (NL), A. Udink et al: "Digital adaptive control of a glasshouse heating system", pages 505—511. This system simultaneously monitors in certain applications the actual energy consumption and compares it with a calculated "normal" value.

A full instrumentation system utilizing a data logger, computer and measuring sensors as disclosed in N.T.I.S. Techn. Notes, April 1984, Springfield, Virginia (US) "Instrumentation for an Energy-Conserving House", NTN84—0233. This system does not include parameter determination by computer nor any form of simulation.

The invention discloses a method of testing the weather-related behaviour including energy consumption of buildings, in which weather-related behaviour of a building is measured and patterend in real-time fashion by using a computer, wherein said computer calculates in a short measurement period automatically and in real-time fashion the parameters which provide a pattern for weather-related behaviour including anti-consumption, and as a part of testing, said computer controls simulators representing residents and electrical appliances, situated inside the actual building.

On the other hand, the invention discloses a method for supervision of comfort and energy consumption of buildings, in which weather-related behaviour of the building is measured and patterned in real-time fashion by using a computer, wherein said computer calculates automatically and in real-time fashion the parameters which provide a pattern for weather-related behaviour and wherein the energy consumption of a building is measured in real-time fashion and compared with that provided by said pattern in real-time fashion or with short operation cycles.

In a preferred embodiment of the method for supervision of comfort and energy consumption of buildings, the residents and electrical appliances are represented by simulators, situated inside the actual building.

As the energy efficiency of small house linings is improving, the share of so-called freely available sources of heat has increased in satisfying the heat requirement. The residients's ways of living have a substantial effect on the energy consumption of a building, e.g. through the available sources of heat. This is why the energy consumption of two similar buildings may vary in practical conditions at 1:3. Thus, it has been difficult to obtain reliable comparative data about the energy consumption of buildings.

A simple pattern has been created for the energy consumption of a building, the parameters of said pattern being measured during a period of 24 to 48 hours. During this period, the actual use of a building is simulated by means of a standard program with the help of electric resistances. Thereafter and by means of annual meterorological data, it will be possible to use the pattern to calculate the annual energy consumption of a building in a manner essentially more reliable than before. The energy consumptions anticipated by means of the pattern correspond well to measured results. If compared to the present used degree-data technique, the consumption of heating energy calculated by means of the pattern will be essentially lower. The share of freely available sources of heat will be typically about 30% of a building's heating requirement but may rise at its best to more than half of said requirement.

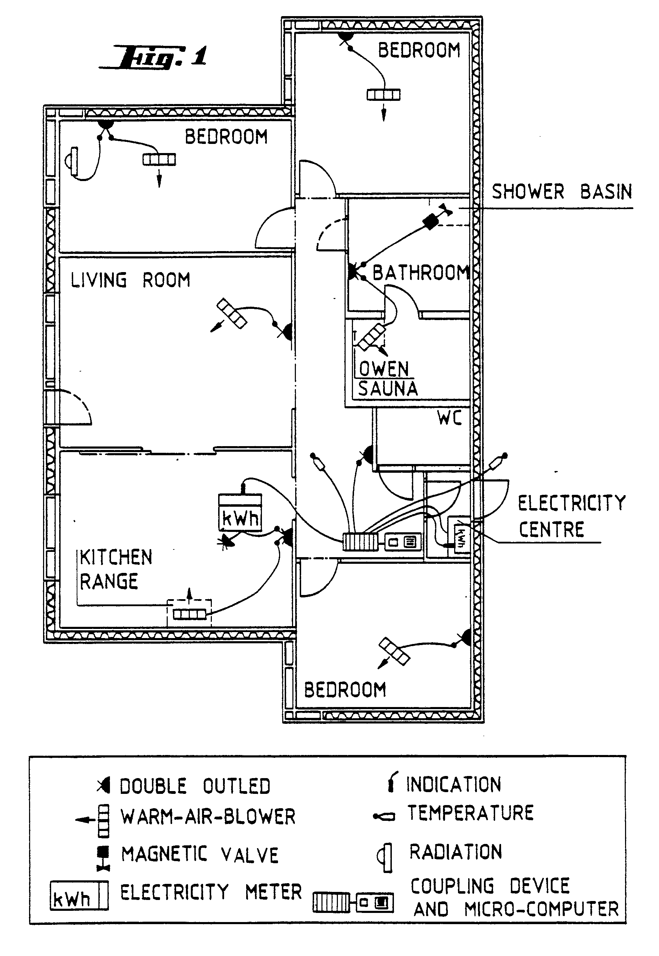

The method is capable of eliminating disturbing and hard-to-measure factors from the interaction process of weather and building. Ventilation can be standardized by adjusting it to a desired value prior to testing. The factor that is most difficult to measure in small buildings is the resident's influence. According to Fig. 1, the resident is replaced by a simulator (e.g. simply a hot-air blower) whose power consumption corresponds to the heat output of a resident. In testing, the same simulators represent also the action of a TV-set, kitchen range, sauna stove, lights and the like electrical appliances, and the commands to simulators are transmitted through the mains of a building. Moreover, the solar radiation is measured inside the window and the screening provided by glazings is found out by flashing a standard light source outside the window.

Fig. 1 shows a layout of a test target according to the invention,

Fig. 2 illustrates the energy flows of a building,

Fig. 3 shows estimated and measured energy flows (temperatures),

Figs. 4 and 5 illustrate required energy and its costs.

The measurements are effected by means of a data collector, having a computer connected thereto. The computer tests the building according to a program chosen by the operator. The program includes starting of the aforementioned hot-air blowers in compliance with the use of a house as well as variation of indoor temperature for finding out the setting and solidity of the house.

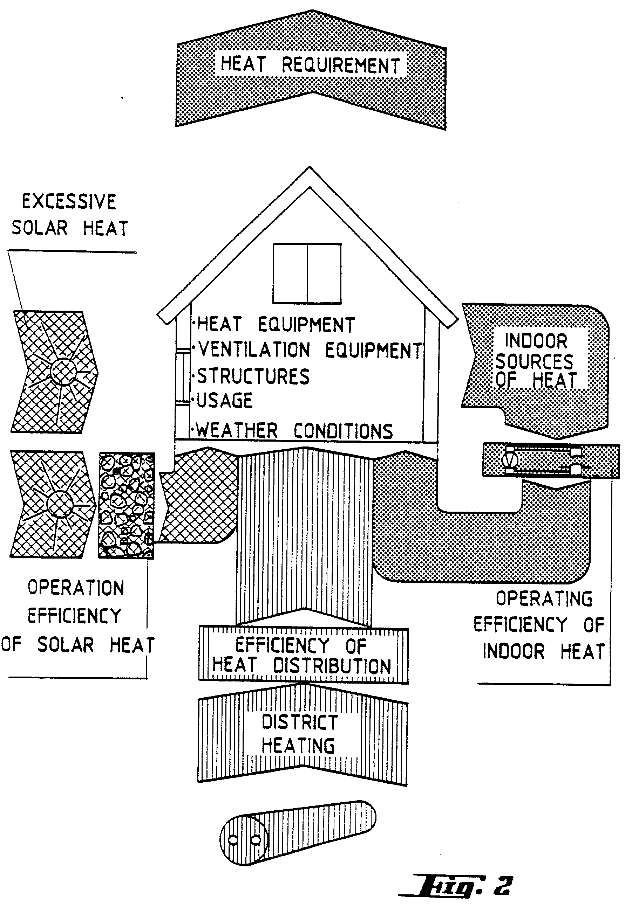

Simultaneously or in real time with the proceedings, the testing mechanism measures the reasons and consequences of interaction and produces a mathematical pattern thereof. In a gravity simplified manner, the pattern in Fig. 2 shows the energy flows of a building.

According to statistical mathematics, a pattern will be more and more representative when increasing the number of samples. Quadruplication of the number of samples always doubles the accuracy. A sample here is a measuring interval which can be from about a second to an hour. In practice, an hour is probably most suitable since the weather-related behaviour of a building is an extremely slow process, the delays being even dozens of hours.

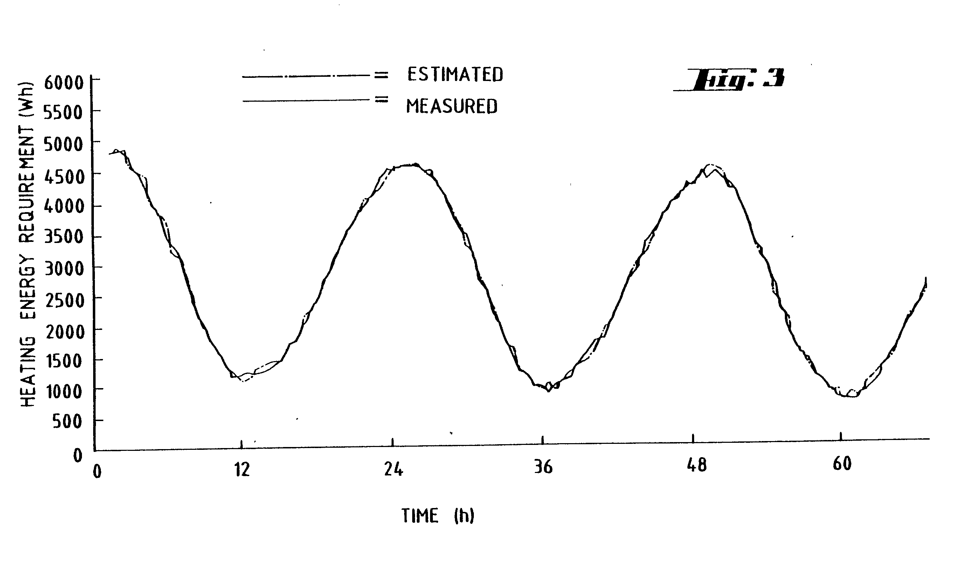

Wyen the accuracy of a pattern is sufficient, i.e. the following sample no longer changes the objective of a pattern, the testing can be stopped. By that time, the testing mechanism recognizes the weather-related behaviour of a building. During the testing period, this means that the estimated energy flows or temperatures correspond sufficiently well to those measured, which is the case in Fig. 3.

The parameters, obtained from a building for explaining the weather-related behaviour during a test period, explain the consumption the same way in any weather.

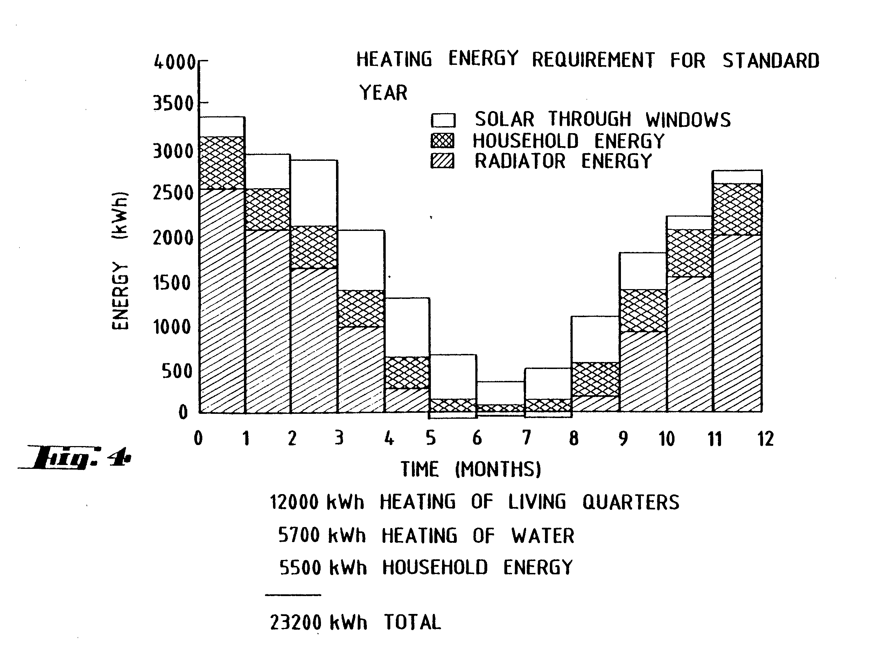

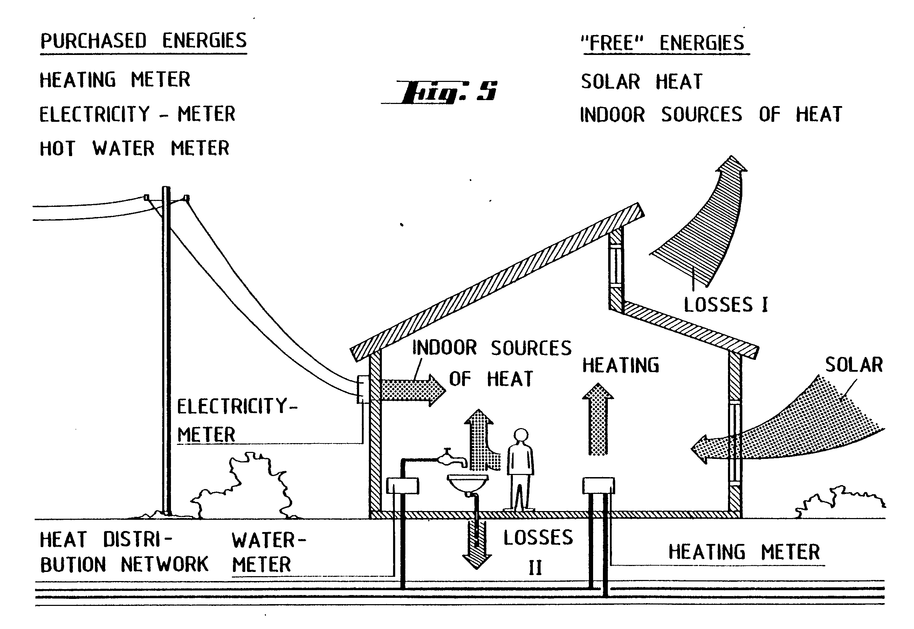

Thus, it is possible to output e.g. the energy flows of a year at a target in question and also in a desired district in a desired country. It is also possible to output maximum effects and the minima and maxima of indoor temperature in a chosen weather. Eventual results are shown in Figs. 3, 4 and 5 in the form of energy and money.

According to the performed tests, the accuracy of reproducibility is equal to the accuracy of a pattern in a single test. Thus, the method provides the same result regardless of the test period provided that the charcteristics of a building have remained the same.

The expositors needed in a pattern of weather-related behaviour are somewhat dependent on a target. Typically needed are e.g.

weather information
stationary thermal conductance
transient thermal conductance
heat capacity of building
indoor temperature of building
delay of building
mode of operation of heating equipment regulator
utilization of freely available sources of heat
size of windows.

The values of expositors are obtained in a real-time pattern from measured results by means of statistical mathematics. The designer can use the same pattern by giving experimental values to expositors.

By means of the novel method, the weather-related behaviour of a building can be brought under control

in real time or as quickly as possible
totally objectively, the method being automatic
at desired accuracy since the increased accuracy only requires more measuring time presuming that measurements are representative
economically in view of the present energy researches. Compared to typical energy studies, this novel method is believed to reduce costs with reliability better than before
tester can be left in building to produce continuous estimate of energy flows and temperatures. The estimate can then be used for operation control or calculations of control anticipations.

**Claims**

1. A method of testing the weather-related behaviour including energy consumption of buildings, in which weather-related behaviour of a building is measured and patterned in realtime fashion by using the computer, characterized in that said computer calculates in a short measurement period automatically and in real-time fashion the parameters which provide a pattern for weather-related behaviour including energy consumption, and as part of testing, said computer controls simulators representing residents and electrical appliances, situated inside the actual building.

2. A method for supervision of comfort and energy consumption of buildings, in which weather-related behaviour of a building is measured and patterned in real-time fashion by using a computer, characterized in that said computer calculates automatically and in real-time fashion the parameters which provide a pattern for weather-related behaviour, and that the energy consumption of a building is measured in real-time fashion and compared with that provided by the said pattern in real-time fashion or with short operation cycles.

3. A method as set forth in claim 2, characterized in that residents and electrical appliances are represented by simulators, situated inside the actual building.

## Patentansprüche

1. Verfahren zur Prüfung von auf Wetter bezogenem Verhalten einschließlich Energieverbrauch von Gebäuden, bei dem ein wetterbezogenes Verhalten eines Gebäudes gemessen und unter Verwendung eines Computers in ein Echtzeitformmodell gebracht wird, dadurch gekennzeichnet, daß der Computer in einer kurzen Meßphase automatisch und in Echtzeitform die Parameter berechnet, die ein Modell für ein wetterbezogenes Verhalten einschl. Energieverbrauch vorsehen, und daß der Computer als Teil des Prüfens innerhalb des tatsächlichen Gebäudes angeordnete Simulatoren kontrolliert, die Bewohner und elektrische Einrichtungen darstellen.

2. Verfahren zur Überwachung der Behaglichkeit und des Energieverbrauchs von Gebäuden, bei dem ein wetterbezogenes Verhalten eines Gebäudes gemessen und unter Verwendung eines Computers in ein Echtzeitformmodell gebracht wird, dadurch gekennzeichnet, daß der Computer automatisch und in Echtzeitform die Parameter berechnet, die ein Modell für ein wetterbezogenes Verhalten vorsehen, und daß der Energieverbrauch eines Gebäudes in Echtzeitform gemessen und mit dem von dem Echtzeitformmodell gelieferten oder mit kurzen Betriebszyklen verglichen wird.

3. Verfahren nach Anspruch 2, dadurch geeknnzeichnet, daß Bewohner und elektrische Einrichtungen von innerhalb des tatsächlichen Gebäudes angeordneten Simulatoren repräsentiert werden.

## Revendications

1. Procédé de controle du comportement, y compris de la consommation énergétique, d'immeubles en fonction des conditions météorologiques, dans lequel, à l'aide d'un ordinateur, on mesure et trace, en temps réel, le comportement d'un immeuble en fonction des conditions météorologiques, caractérisé en ce que, dans une courte période de mesure, ledit ordinateur calcule automatiquement et en temps réel les paramètres qui fournissent un tracé du comportement, y compris de la consommation énergétique, en fonction des conditions météorologiques, et, dans le cadre du contrôle, ledit ordinateur commande des simulateurs représentant des habitants et des appareils électriques situés dans l'immeuble réel.

2. Procédé de surveillance du confort et de la consommation énergétique d'immeubles, dans lequel, à l'aide d'un ordinateur, on mesure et trace, en temps réel, le comportement d'un immeuble en fonction des conditions météorologiques, caractérisé en ce que ledit ordinateur calcule automatiquement et en temps réel les paramètres qui fournissent un tracé du comportement en fonction des conditions météorologiques, et en ce que l'on mesure en temps réel, la consommation énergétique d'un immeuble et, en temps réel ou suivant de courts cycles de fonctionnement, on la compare à celle qui est fournie par ledit tracé.

3. Procédé selon la revendication 2, caractérisé en ce que les habitants et les appareils électriques sont représentés par des simulateurs disposés dans l'immeuble réel.

*Fig. 1*

BEDROOM

BEDROOM

LIVING ROOM

SHOWER BASIN

BATHROOM

OWEN
SAUNA

WC

KITCHEN
RANGE

kWh

ELECTRICITY
CENTRE

kWh

BEDROOM

| | | |
|---|---|---|
| ◀ | DOUBLE OUTLED | ſ INDICATION |
| ← | WARM-AIR-BLOWER | ⌐ TEMPERATURE |
| ■ | MAGNETIC VALVE | ◫ RADIATION |
| kWh | ELECTRICITY METER | COUPLING DEVICE AND MICRO-COMPUTER |

Fig. 2

Fig. 3

HEATING ENERGY REQUIREMENT FOR STANDARD YEAR

SOLAR THROUGH WINDOWS
HOUSEHOLD ENERGY
RADIATOR ENERGY

ENERGY (kWh)

TIME (MONTHS)

12000 kWh HEATING OF LIVING QUARTERS

5700 kWh HEATING OF WATER

5500 kWh HOUSEHOLD ENERGY

23200 kWh TOTAL

Fig. 4

EP 0 232 278 B1

PURCHASED ENERGIES

HEATING METER
ELECTRICITY - METER
HOT WATER METER

*Fig. 5*

"FREE" ENERGIES

SOLAR HEAT
INDOOR SOURCES OF HEAT

LOSSES I

INDOOR SOURCES
OF HEAT

HEATING

SOLAR

ELECTRICITY-
METER

HEAT DISTRI-
BUTION NETWORK

WATER-
METER

LOSSES
II

HEATING METER

EP 0 232 278 B1